# EUROPÄISCHE PATENTSCHRIFT

(11) **EP 2 649 695 B1**
(45) Veröffentlichungstag und Bekanntmachung des Hinweises auf die Patenterteilung: **02.08.2017**
(21) Anmeldenummer: 11770774.5
(22) Anmeldetag: 18.10.2011
(51) Int. Cl.: H02H 9/04, H02H 9/06, H01C 7/12

(54) **ÜBERSPANNUNGSABLEITERANORDNUNG MIT MINDESTENS EINEM VARISTORABLEITELEMENT**
SURGE ARRESTER ARRANGEMENT HAVING AT LEAST ONE VARISTOR DISSIPATION ELEMENT
DISPOSITIF PARAFOUDRE DOTÉ D'AU MOINS UN ÉLÉMENT DE DÉRIVATION-VARISTANCE

(30) Priorität: 08.12.2010 DE 102010053700; 15.02.2011 DE 102011011254
(43) Veröffentlichungstag der Anmeldung: 16.10.2013
(73) Patentinhaber: Dehn + Söhne GmbH + Co. KG, 92318 Neumarkt/Opf. (DE)
(72) Erfinder: HIRSCHMANN, Helmut, 92348 Berg (DE); ZÄUNER, Edmund, 92334 Berching/Pollanten (DE)
(74) Vertreter: Kruspig, Volkmar
(86) Internationale Anmeldenummer: PCT/EP2011/068164
(87) Internationale Veröffentlichungsnummer: WO 2012/076226

(56) Entgegenhaltungen:
- EP-A1- 1 447 831
- EP-A1- 1 551 089
- WO-A1-90/13960
- WO-A1-98/45919
- DE-A1- 2 547 604

## Beschreibung

Die Erfindung betrifft eine Überspannungsableiteranordnung mit mindestens einem Varistorableitelement sowie eine Abtrennvorrichtung, um das mindestens eine Varistorableitelement vom Netz zu trennen, wobei die Abtrennvorrichtung in den elektrischen Anschlusspfad der Ableiteranordnung eingebunden ist, gemäß Oberbegriff des Patentanspruches 1.

Aus der DE 602 16 984 T2 ist eine Überspannungsschutzschaltung für Kommunikationssysteme vorbekannt, wobei die Schaltung einen Metalloxid-Varistor sowie einen in Reihe befindlichen Gasentladungsableiter umfasst.

Aufgrund des Kapazitätsunterschiedes zwischen dem Metalloxid-Varistor und der Gasentladungseinrichtung veranlasst der aus den beiden Elementen gebildete kapazitive Spannungsteiler, dass nahezu die gesamte Spannung an der Gasentladungsableitereinrichtung anliegt, so dass beim Auftreten eines Spannungsstoßes an der Stromversorgungsleitung die Gasentladungseinrichtung den Metalloxid-Varistor aktiviert, wobei die Spannung, die die transiente Energie absorbiert, begrenzt wird. Wenn der Spannungsstoß endet und die Spannung an der Netzleitung zu ihrem Nennwert zurückkehrt, wird der Varistor aktiviert und zwar dann, wenn die Löschspannung der Gasentladungsableitereinrichtung unter der Höchstspannung der angeschlossenen Leitung liegt. Hieraus ergibt sich eine Fehlfunktion, die bei Telekommunikationsanwendungen zu einem nicht annehmbaren Rauschen führt.

Gemäß DE 602 16 984 T2 wird der Gasentladungsableiteinrichtung ein Widerstand parallel geschalten, wobei der Wert des Widerstandes derart ist, dass die Spannung, die vom Gasentladungsableiter im Gleichgewichtszustand unterstützt wird, geringer ist als die erforderliche Löschspannung, um den Ableiter geöffnet zu halten.

Bei dem Überspannungsableiter mit einem Gehäuse und mit mindestens einem Ableitelement gemäß DE 10 2007 051 854 A1 wird von einem Varistor sowie einer Abtrennvorrichtung ausgegangen.

Die Abtrennvorrichtung dient dazu, das Ableitelement, nämlich den Varistor vom Netz zu trennen, wenn eine thermische Überlastung vorliegt. Beispielsweise ist die Abtrennvorrichtung als Lötstelle ausgebildet und in den elektrischen Anschlusspfad innerhalb des Ableiters eingebunden.

Über die Lötstelle kann ein beweglicher Leiterabschnitt oder eine bewegliche leitende Brücke mit dem Ableitelement einerseits und der Leiterabschnitt oder die Brücke andererseits mit einem ersten elektrischen Außenanschluss des Ableiters verbunden werden. Im Bewegungsweg des Leiterabschnittes oder der Brücke ist ein leitfähiges Element angeordnet, dessen erstes Ende bei ausgelöster Abtrennvorrichtung mit dem Leiterabschnitt oder der Brücke in Kontakt gelangt, wobei dessen zweites Ende mit einem zweiten elektrischen Außenanschluss in Verbindung steht und wobei weiterhin das leitfähige Element eine Schalteinrichtung aufweist oder als Schalteinrichtung ausgebildet ist.

Insbesondere bei Photovoltaikanlagen ist aufgrund der Charakteristik der speisenden Quelle der dortige Betriebsstrom nahezu dem Kurzschlussstrom gleich. Ein übliches Abtrennen bei Erwärmung eines Varistors und seiner Abtrennvorrichtung kann bei solchen Gleichspannungsanwendungen nicht zielführend sein, da die Systemspannung von Photovoltaikanlagen bis zu 1000 Volt beträgt und die Unterbrechung von 1000 Volt-Gleichstromkreisen nur mit einem erheblichen konstruktiven oder apparativen Aufwand realisierbar ist.

Um dieses Problem zu lösen, wird gemäß DE 10 2007 051 854 A1 die Abtrennvorrichtung so weitergebildet, dass diese in der Lage ist, einen Kurzschlussstrom zu führen. Es wird also die vorhandene Abtrennfunktion um eine Kurzschlussfunktion ergänzt, die zeitlich begrenzt den Fehlerstrom führt.

Dabei wird davon ausgegangen, dass die Abtrennvorrichtung eine Lötstelle aufweist, die ein bei einer entsprechenden Ansprechtemperatur schmelzendes Lot umfasst.

Bei Überspannungsableitern eingesetzte Varistoren bestehen prinzipiell aus einer Vielzahl von parallel und in Reihe geschalteten bidirektional arbeitenden Dioden, die im Sperrbetrieb betrieben werden. Ein eingesetzter Sinterwerkstoff besteht überwiegend aus Zinkoxid und weiteren Metalloxiden. Der Varistoreffekt bildet sich bei der Sinterung an den Grenzen zwischen zwei Zinkoxidkörnern aus. Aus der Vielzahl von solchen Mikrovaristoren ergibt sich dann die Gesamtwirkung des Varistors, der mit zunehmender Fläche ein größeres Ableitvermögen erreicht. Mit dicker werdenden Varistorscheiben wird der Schutzpegel und die Netzspannung höher, da sich die Zahl der in Reihe geschalteten Mikrovaristoren erhöht. Nachteilig beim Einsatz derartiger Varistoren im Überspannungsschutz ist das mittlere Absorptionsvermögen, die kaum zu beeinflussende Alterung und eine hohe relativ hohe Eigenkapazität. Sehr häufige aber auch sehr energiereiche Ableitungen bis hin zum Grenzableitstrom lassen die oben erwähnten Diodenkörner durchlegieren, so dass ohne das Ansprechen der thermischen Abtrennvorrichtung der durchlegierte Varistor einen Kurzschluss für die angeschlossene Strom-Netzversorgung bildet. In einem solchen Fall muss der fließende Strom, d. h. der Kurzschlussstrom von den inneren Verbindungen der Ableiteranordnung geführt und von externen Schutzeinrichtungen abgeschalten werden.

Speziell bei Gleichspannungsanwendungen stellt die obige Problematik sehr hohe Anforderungen an interne und externe Abtrennvorrichtungen bzw. an die einzusetzenden Schaltgeräte.

Aus der WO 90/13960 A1, das den Oberbegriff des Anspruchs 1 bildet, ist eine Überspannungsschutzeinrichtung für Telekommunikationsleitungen vorbekannt, welche einen triggerbaren Überspannungsschutz aufweist, und wobei Schaltmittel vorhanden sind, um ein Abschalten der Leitungsverbindung bei bestimmten Überspannungsereignissen zu bewirken.
Bei den Überspannungsableitern gemäß EP 1 447 831 A1 kommen Varistoren zum Einsatz, die mit einer thermischen Abtrenneinrichtung versehen sind. Im Überlastfall wird der jeweilige Varistor vom Netz getrennt. Weiterhin ist eine Anzeigeeinrichtung vorhanden, die den Ausfall des entsprechenden Varistors signalisiert.
Bei der Einrichtung zum Schutz gegen transiente Überspannungen gemäß WO 98/45919 A1 besteht der jeweilige Überspannungsschutz aus einer Reihenschaltung einer Funkenstrecke mit einer Gruppe von mehreren parallelgeschalteten Varistoren.
Gemäß der DE 25 47 604 A1 wird von der Aufgabe ausgegangen, das Verhältnis von Ansprech- zu Löschspannung zu optimieren, ohne dass das eigentliche Löschvermögen des Überspannungsableiters, ausgebildet als Funkenstrecke, beeinträchtigt wird. Diesbezüglich kommt eine Reihenschaltung von spannungsabhängigen Widerständen mit zwei hintereinander geschalteten Stapeln von Funkenstrecken zur Anwendung, bei welchen die Steuerwiderstände parallel zu den einzelnen Funkenstreckenstapeln mit verschiedenem Exponent bemessen sind.
Aus dem Vorgenannten ist es daher Aufgabe der Erfindung, eine weiterentwickelte Überspannungsableiteranordnung mit mindestens einem Varistorableitelement anzugeben, welche in der Lage ist, im Überlastungs-Kurzschlusszustand im Inneren des Varistorableitelementes den Kurzschlussstrom der angeschlossenen Stromversorgung bzw. des angeschlossenen Netzes zu reduzieren, um Folgeschäden, insbesondere angeschlossener Geräte und/oder interner Verbindungen nebst Brandgefahr oder dergleichen wirksam zu reduzieren.

Die Lösung der Aufgabe der Erfindung erfolgt mit einer Überspannungsableiteranordnung gemäß der Merkmalskombination nach Patentanspruch 1, wobei die Unteransprüche zweckmäßige Ausgestaltungen und Weiterbildungen umfassen.

Es wird demnach von einer Überspannungsableiteranordnung mit mindestens einem Varistorableitelement sowie einer Abtrennvorrichtung ausgegangen, wobei die Abtrennvorrichtung dazu dient, das Varistorableitelement vom Netz zu trennen. Die Abtrennvorrichtung ist in den elektrischen Anschlusspfad der Ableiteranordnung eingebunden.

Weiterhin ist im elektrischen Anschlusspfad zum Varistorableitelement ein Strombegrenzungswiderstand in Reihe geschalten, um bei Nichtansprechen der Abtrennvorrichtung und einem Überlastungs-Kurzschlusszustand, insbesondere bedingt durch Durchlegieren des Varistorableitelementes den Kurzschlussstrom des angeschlossenen Netzes bzw. der angeschlossenen Stromversorgung zu reduzieren. Der Widerstand kann ein lineares oder aber auch nichtlineares Verhalten aufweisen.

Der erwähnte Strombegrenzungswiderstand ist nicht nur als üblicher ohmscher Widerstand realisierbar, sondern kann als integraler Baustein eines elektrischen Anschlussteiles oder Anschlusselementes ausgeführt sein. Beispielsweise besteht die Möglichkeit, zumindest einen Teil des elektrischen Anschlusselementes aus einem weniger gut leitfähigen Material, z. B. Stahl zu fertigen, um die gewünschte niederohmige Widerstandswirkung zu erzielen.

Bei einer bevorzugten Ausführungsform der Erfindung ist der Strombegrenzungswiderstand niederohmig ausgeführt. Der Widerstandswert liegt hier im Bereich von einigen Milliohm bis zu einigen Ohm.

Bei der Ausführungsform der Erfindung umfasst die Abtrennvorrichtung eine Einrichtung, welche im thermischen Überlastfall des Varistorableitelementes eine Sicherung in den elektrischen Anschlusspfad schaltet.

Erfindungsgemäß ist dem Strombegrenzungswiderstand eine Funkenstrecke oder ein Gasentladungsableiter parallel geschalten, um eine Spannungsüberlastung des Strombegrenzungswiderstandes zu verhindern.

Bei einer bevorzugten Ausführungsform ist das Varistorableitelement als Metalloxid-Varistor ausgebildet.

Die Überspannungsableiteranordnung ist weiterhin für einen Einsatz bei Anwendungen im Gleichspannungsbereich, insbesondere im Bereich des Überspannungsschutzes von Photovoltaikanlagen besonders geeignet.
Die Erfindung soll nachstehend anhand eines Ausführungsbeispieles sowie unter Zuhilfenahme von Figuren näher erläutert werden.

Hierbei zeigen:
- Fig. 1: eine Ausführungsform der Überspannungsableiteranordnung mit Abtrennvorrichtung und Strombegrenzungswiderstand und
- Fig. 2: eine Ausführungsform der Überspannungsableiteranordnung mit Varistorableitelement sowie eine Abtrennvorrichtung, ausgebildet als thermischer Umschalter zum Erhalt eines Fail-Safe-Zustandes bzw. zum Umschalten auf eine Sicherung Si.

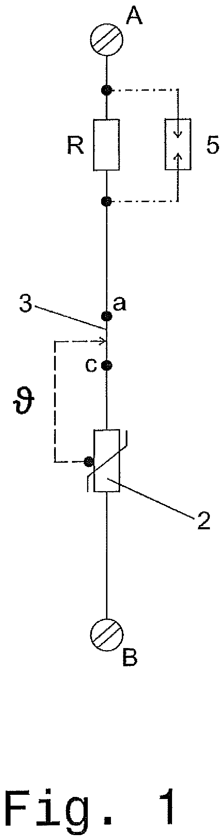

Gemäß der Darstellung nach Fig. 1 wird zwischen den äußeren Anschlüssen A und B ein Varistor 2 geschalten.

Dieser Varistor 2 ist über eine Abtrennvorrichtung 3, die thermisch auslösbar ist, abtrennbar.

Zwischen den Punkten a und c besteht ein Leiterabschnitt oder eine Brücke, so dass sich eine elektrische Verbindung im nicht ausgelösten Zustand ergibt.

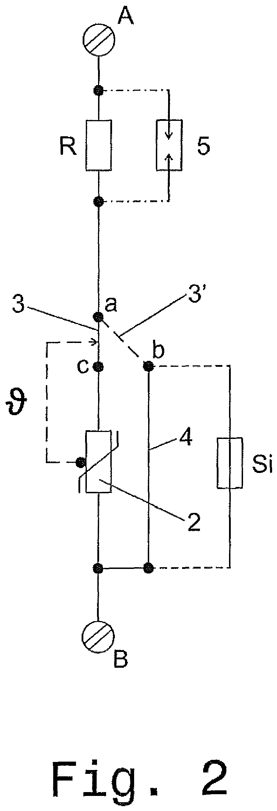

Im Zustand 3' nach Fig. 2 ist die Abtrennvorrichtung ausgelöst, und es wurde eine Verbindung auf dem Weg a zu b mit Hilfe eines Kurzschlussbügels 4 hergestellt, welcher den Varistor 2 überbrückt. Alternativ kann an Stelle eines Kurzschlussbügels 4 eine Sicherung vorgesehen sein, die den Strom übernimmt und beim Erreichen ihres maximalen Belastungswertes anspricht. Der betätigte bzw. ausgelöste Zustand ist in der Fig. 2 zwischen den Punkten a und b gestrichelt dargestellt. Die Schaltbewegung der Vorrichtung 3 kann nach dem Auslöten eines Lotmittels unter dem Einfluss einer Druckfeder ausgeführt werden.

Die Abtrennvorrichtung 3 dient also dem Erreichen definierter Zustände im Überlast- bzw. Fehlerfall des Varistors 2.

Sehr häufige oder sehr energiereiche Ableitungen bis hin zum Grenzableitstrom führen jedoch dazu, dass innerhalb des Varistorableitelementes es zu einem Durchlegieren kommt in dessen Folge das Varistorableitelement leitfähig wird. Dieser Zustand ist nicht grundsätzlich mit einer derartig starken Temperaturerhöhung verbunden, dass die Abgrenzvorrichtung 3 anspricht. Wenn diese Situation eintritt, d. h. der Fehlerzustand "Durchlegieren" gegeben ist, bildet der durchlegierter Varistor 2 quasi einen Kurzschluss der angeschlossenen Netz- bzw. Stromversorgung zwischen den Anschlusspunkten A und B. Der fließende Strom muss dann von den internen Verbindungen der Überspannungsableiteranordnung geführt und von internen bzw. externen Schutzeinrichtungen abgeschalten werden. Dies stellt bei Gleichspannungsanwendungen sehr hohe Anforderungen an die internen und externen Abtrennvorrichtungen bzw. an die einzusetzenden Schaltgeräte.

Diesbezüglich ist zum Varistorableiter 2 ein Strombegrenzungswiderstand R in Reihe geschalten. Den Widerstandswert dieses Strombegrenzungswiderstandes R liegt im Bereich von wenigen Milliohm bis einigen Ohm. Durch die Verwendung des Strombegrenzungswiderstandes R kann die Konstruktion des Überspannungsableiters sowie dessen interne und externe Auslegung der notwendigen Abtrennvorrichtung bzw. der Schaltgeräte auf den durch den Widerstand strombegrenzten Fall ausgelegt werden.

Erfindungsgemäß ist dem Strombegrenzungswiderstand R eine Funkenstrecke 5 oder ein Gasentladungsableiter parallel geschalten werden. Diese Parallelschaltung verhindert eine spannungsmäßige Überlastung des Widerstandes und reduziert den Schutzpegel der Gesamtanordnung.

Die Reihenschaltung zwischen Varistorableitelement 2 und Strombegrenzungswiderstand R kann auch bei einer Schaltungsanordnung gemäß der Darstellung nach Fig. 2 Verwendung finden, die eine Abtrennvorrichtung aufweist, die sich als Umschalter darstellt, um entweder gezielt den Varistor zu überbrücken und eine externe Sicherung zum Ansprechen zu bringen oder aber auf eine Sicherung umzuschalten, wenn die thermische Abtrennvorrichtung 3 aufgrund eines Überlastungszustandes des Varistorableitelementes 2 aktiviert wurde.

## Patentansprüche

1. Überspannungsableiteranordnung mit mindestens einem Varistorableitelement sowie einer Abtrennvorrichtung, um das mindestens eine Varistorableitelement vom Netz zu trennen, wobei die Abtrennvorrichtung in den elektrischen Anschlusspfad (A;B) der Ableiteranordnung eingebunden ist, wobei weiterhin im elektrischen Anschlusspfad (A;B) zum Varistorableitelement (2) ein Strombegrenzungswiderstand (R) in Reihe geschalten ist, um bei Nichtansprechen der Abtrennvorrichtung (3) und einem Überlastungs-Kurzschlusszustand im Inneren des Varistorableitelementes (2) den Kurzschlussstrom des angeschlossenen Netzes zu reduzieren,
**dadurch gekennzeichnet, dass**
dem Strombegrenzungswiderstand (R) eine Funkenstrecke (5) oder ein Gasentladungsableiter parallel geschalten und derart konfiguriert ist, dass eine Spannungsüberlastung des Strombegrenzungswiderstandes (R) verhindert wird.

2. Überspannungsableiteranordnung nach Anspruch 1,
**dadurch gekennzeichnet, dass**
der Strombegrenzungswiderstand (R) niederohmig ausgeführt ist.

3. Überspannungsableiteranordnung nach Anspruch 2,
**dadurch gekennzeichnet, dass**
der Widerstandswert des Strombegrenzungswiderstandes (R) im Bereich von einigen Milliohm bis einigen Ohm liegt.

4. Überspannungsableiteranordnung nach einem der vorangegangenen Ansprüche,
**dadurch gekennzeichnet, dass**
die Abtrennvorrichtung (3) eine Einrichtung (3') umfasst, welche im thermischen Überlastfall des Varistorableitelementes (2) eine Sicherung (Si) in den elektrischen Anschlusspfad (A;B) schaltet.

5. Überspannungsableiteranordnung nach einem der vorangegangenen Ansprüche,
**dadurch gekennzeichnet, dass**
das Varistorableitelement (2) als Metalloxid-Varistor ausgebildet ist.

6. Überspannungsableiteranordnung nach einem der vorangegangenen Ansprüche,
**gekennzeichnet durch** dessen Einsatz bei der Anwendung im Gleichspannungsbereich.

## Claims

1. A surge arrester arrangement having at least one varistor dissipation element as well as a disconnecting device for disconnecting the at least one varistor dissipation element from the mains, the disconnecting device being integrated in the electric connection path (A; B) of the arrester arrangement, wherein furthermore a current limiting resistor (R) is connected in series in the electric connection path (A; B) to the varistor dissipation element (2) in order to reduce the short-circuit current of the connected mains in case of the disconnecting device (3) failing to respond or an overload short-circuit state inside the varistor dissipation element (2),
**characterized in that**
a spark gap (5) or a gas discharge arrester is connected in parallel to the current limiting resistor (R) and configured such that a voltage overload of the current limiting resistor (R) is prevented.

2. The surge arrester arrangement according to claim 1,
**characterized in that**
the current limiting resistor (R) is realized to be of low resistance.

3. The surge arrester arrangement according to claim 2,
**characterized in that**
the resistance value of the current limiting resistor (R) is in the range from several milliohms to several ohms.

4. The surge arrester arrangement according to any one of the preceding claims,
**characterized in that**
the disconnecting device (3) comprises a device (3') which switches a fuse (Si) into the electric connection path (A; B) in case of thermal overload of the varistor dissipation element (2).

5. The surge arrester arrangement according to any one of the preceding claims,
**characterized in that**
the varistor dissipation element (2) is configured as a metal oxide varistor.

6. The surge arrester arrangement according to any one of the preceding claims,
**characterized by** its use in applications in the DC-voltage range.

## Revendications

1. Agencement dérivateur de surtension comprenant au moins un élément dérivateur à varistance ainsi qu'un dispositif de coupure, afin de séparer ledit au moins un élément dérivateur à varistance vis-à-vis du réseau, dans lequel le dispositif de coupure est intégré dans le trajet de connexion électrique (A ; B) de l'agencement dérivateur, et une résistance de limitation de courant (R) est en outre branchée en série dans le trajet de connexion électrique (A ; B) vers l'élément dérivateur à varistance (2) afin de réduire, en l'absence de réaction du dispositif de coupure (3) et dans une situation de court-circuit de surcharge à l'intérieur de l'élément dérivateur à varistance (2), le courant de court-circuit du réseau branché,
**caractérisé en ce que**
un éclateur (5) ou un dérivateur à décharge gazeuse est branché en parallèle à la résistance de limitation de courant et est configuré de telle façon qu'une surcharge de tension de la résistance de limitation de courant (R) est empêchée.

2. Agencement dérivateur de surtension selon la revendication 1,
**caractérisé en ce que** la résistance de limitation de courant (R) est réalisée avec une faible résistance.

3. Agencement dérivateur de surtensions selon la revendication 2,
**caractérisé en ce que** la valeur de la résistance de limitation de courant (R) est dans la plage de quelques milliohms jusqu'à quelques ohms.

4. Agencement dérivateur de surtension selon l'une des revendications précédentes,
**caractérisé en ce que** le dispositif de coupure (3) inclut un moyen (3') qui, dans le cas d'une surcharge thermique de l'élément dérivateur à varistance (2), branche un coupe-circuit (Si) dans le trajet de connexion électrique (A ; B).

5. Agencement dérivateur de surtension selon l'une des revendications précédentes,
**caractérisé en ce que** l'élément dérivateur à varistance (2) est réalisé sous forme de varistance métal-oxyde.

6. Agencement dérivateur de surtension selon l'une des revendications précédentes, **caractérisé par** son emploi dans l'application dans le domaine des courants continus.
